# EUROPEAN PATENT SPECIFICATION

(11) **EP 2 648 826 B1**
(45) Date of publication and mention of the grant of the patent: **12.11.2014**
(21) Application number: 11791303.8
(22) Date of filing: 07.12.2011
(51) Int. Cl.: B01D 53/14, B01D 53/62

(54) **PROCESS FOR REMOVING CARBON DIOXIDE FROM A GAS STREAM**
VERFAHREN ZUM ENTFERNEN VON KOHLENDIOXID AUS EINEM GASSTROM
PROCÉDÉ D'ÉLIMINATION DU DIOXYDE DE CARBONE CONTENU DANS UN FLUX GAZEUX

(30) Priority: 08.12.2010 EP 10194082
(43) Date of publication of application: 16.10.2013
(73) Proprietor: Shell Internationale Research Maatschappij B.V., 2596 HR Den Haag (NL)
(72) Inventor: GEUZEBROEK, Frank Haiko, NL-1031 HW Amsterdam (NL); KONIJN, Gerrit, NL-1031 HW Amsterdam (NL); ZHANG, Xiaohui, NL-1031 HW Amsterdam (NL)
(74) Representative: Matthezing, Robert Maarten
(86) International application number: PCT/EP2011/072062
(87) International publication number: WO 2012/076597

(56) References cited:
- US-A1- 2009 199 709
- US-A1- 2010 288 126
- ZEHNER P ET AL: "Bubble Columns", 1 January 1992 (1992-01-01), PRINCIPLES OF CHEMICAL REACTION ENGINEERING AND PLANT DESIGN; ULLMANN'S ENCYCLOPEDIA OF INDUSTRIAL CHEMISTRY, VCH WEINHEIM, DE, PAGE(S) 275 - 307, XP009147189, ISBN: 0-89573-539-3 vol. B4, pages 275-307, cited in the application the whole document

## Description

### Field of the invention

The present invention relates to a process for removing carbon dioxide from a gas stream, especially flue gases.

### Background of the invention

During the last decades there has been a substantial global increase in the amount of carbon dioxide emission to the atmosphere. Emissions of carbon dioxide into the atmosphere are thought to be harmful due to its "greenhouse gas" property, contributing to global warming. Following the Kyoto agreement, carbon dioxide emission has to be reduced in order to prevent or counteract unwanted changes in climate. The largest sources of carbon dioxide emission are combustion of fossil fuels, for example coal or natural gas, for electricity generation and the use of petroleum products as a transportation and heating fuel. These processes result in the production of gases comprising carbon dioxide. Thus, removal of at least part of the carbon dioxide prior to emission of these gases into the atmosphere is desirable.

Processes for removal of carbon dioxide from gases are known in the art. For example, in WO-A-95/21683 a process for removing and preventing emissions of carbon dioxide into the atmosphere is described. In the process described in WO-A-95/21683, carbon dioxide is transferred from exhaust gas exiting a gas turbine to an absorption column where it is contacted with an absorption liquid. Subsequently, the carbon dioxide enriched absorption liquid is regenerated by passing it to a stripper unit which is operated at a temperature of 120-150°C where the carbon dioxide is released from the absorption liquid. A severe drawback of the process described in WO-A-95/21683 is the high energy consumption in the stripper unit, leading to a lower overall energy output. To improve the efficiency, the exhaust gas exiting the gas turbine is passed through a heat recovery steam generator, producing high pressure steam and low pressure steam. The low pressure steam is used to achieve the elevated temperatures needed for the regeneration of the absorbing liquid. Although this results in a better overall efficiency, additional equipment is needed.

Another example for removal of carbon dioxide from gases is described in US 2009/0199709. It describes a process using an absorbent that divides into two liquid fractions after acidic compounds have been absorbed, upon heating. The absorbent can be heated to a temperature ranging from 60 °C to 100°C upon which phase separation takes place. In a next step the phase containing the acidic compounds is separated and regenerated using a distillation column, of which the reboiler is operated at a temperature above 100°C. A disadvantage of the process described in US 2009/0199709 is that regeneration still takes place in a distillation column at higher temperatures, resulting in high energy consumption, again leading to a lower overall energy output.

Thus, there is a need for a more energy-efficient and simple process for removal of carbon dioxide from gases.

### Summary of the invention

It has now been found that carbon dioxide can effectively be removed from a gas stream in a very energy-efficient manner when a gas stream is first contacted with an absorption solvent, and the carbon dioxide enriched absorption solvent so obtained is separated into a mixture comprising three phases, which mixture is passed to a gas lift reactor wherein the absorption solvent is regenerated and carbon dioxide is released from the absorption solvent.

Accordingly, the present invention relates to a process for removing carbon dioxide from a gas stream comprising the steps of:
(a) contacting the gas stream with an absorption solvent to obtain a gas stream with a reduced carbon dioxide content and a carbon dioxide-containing absorption solvent;
(b) withdrawing at least part of the gas stream with the reduced carbon dioxide content;
(c) withdrawing at least part of the carbon dioxide-containing absorption solvent obtained in step (a) and heat it to obtain a mixture comprising a gas phase, an aqueous liquid phase and a non-aqueous liquid phase, wherein carbon dioxide is predominantly present in the gas phase;
(d) introducing at least part of the mixture obtained in step (c) into a gas lift reactor to further release carbon dioxide absorbed in the aqueous liquid phase and the non-aqueous liquid phase, whereby the gas phase establishes circulation and mixing of the aqueous liquid phase and the non-aqueous liquid phase between a lower section of the gas lift reactor and an upper section of the gas lift reactor;
(e) withdrawing a gas stream comprising carbon dioxide from the gas lift reactor;
(f) withdrawing a mixture of the aqueous liquid phase and the non-aqueous liquid phase from the gas lift reactor, which mixture has released carbon dioxide; and
(g) cooling at least part of the mixture of the aqueous liquid phase and the non-aqueous liquid phase to obtain regenerated absorption solvent.

In accordance with the present invention the regeneration of the absorption solvent can be carried out in the gas lift reactor at a much lower temperature than that which is applied in conventional stripper units wherein adsorption liquids are regenerated, bringing about a substantial improvement in overall energy efficiency. Suitably, the process leads to an improvement in the overall energy efficiency of 5 to 35%, preferably of 10 to 35%, and more preferably of 15-35%.

### Detailed description of the invention

The present invention relates to a process for removing carbon dioxide from a gas stream. The process is suitable for any gas comprising carbon dioxide. For example, the gases to be treated may be natural gas, synthesis gas, obtained for instance by (catalytic) partial oxidation and/or by steam methane reforming of hydrocarbons, e.g. methane, natural or associated gas, naphtha, diesel and liquid residual fractions, gases originating from coal gasification, coke oven gases, refinery gases, hydrogen and hydrogen containing gases, and flue gases. Suitably, the gas comprises in the range of from 0.25 to 70% (v/v) of carbon dioxide, preferably from 1 to 45% (v/v). In the event that the gas is a flue gas, the amount of carbon dioxide will generally be lower, suitably from 0.25 to 20% (v/v) and the gas will usually also comprise oxygen, preferably in the range of from 0.25 to 20% (v/v), more preferably from 0.5 to 15% (v/v), still more preferably from 1 to 10% (v/v). As the temperature of the gas stream to be treated will typically be relatively high, preferably the gas stream is cooled prior to being subjected to step (a). Cooling of the gas stream prior to being subjected to step (a) may be done by means known in the art, for example using a fan, a cooler or a gas-gas exchanger.

In accordance with the present invention the gas stream to be treated is contacted in step (a) with an absorption solvent. Suitably, the absorption solvent comprises one or more amines. The amines may be a single primary, secondary or tertiary amine, or may be mixtures of primary amines, secondary amines and/or tertiary amines.

Suitably, the amine to be used in accordance with the present invention has the general formula R₁R₂R₃N, wherein R₁, R₂ and R₃ are independently selected from the group consisting of hydrogen, alkyl, cycloalkyl, alkenyl, alkoxy, alkenyl-O-X, wherein X is selected from the group consisting of hydrogen, alkyl, cycloalkyl, aryl, arylene, halogen alkyl. The alkyl may suitably be a primary, secondary or tertiary alkyl. The alkyl may be linear or branched. The alkyl may comprise 1-12 carbon atoms, in particular 1-6 carbon atoms. With more than 6 carbon atoms in the alkyl group, there is the potential that the amine solidifies upon reaction with carbon dioxide.

The alkenyl may be a primary, secondary or tertiary alkenyl. The alkenyl may be linear or branched. The alkenyl may comprise 1-12 carbon atoms, in particular 1-6 carbon atoms. The cycloalkyl may be C₃-C₉ cycloalkyl, in particular C₄-C₈ cycloalkyl and C₆-C₈ cycloalkyl.

The alkoxy may be a primary, secondary or tertiary alkoxy. The alkoxy may be linear or branched. The alkoxy may comprise 1-12 carbon atoms, in particular 1-6 carbon atoms. With more than 6 carbon atoms in the alkoxy group, there is the potential that the amine solidifies upon reaction with carbon dioxide.

Suitably, the absorption solvent comprises at least a primary amine selected from the group consisting of pentylamine, hexylamine, heptylamine, octylamine, cyclohexylamine, 2-methylcyclohexylamine, 2-methylbutylamine, 2-aminopentane, 2-aminoheptane, 2-aminohexane, 2-aminooctane, 2-aminononane, 3-methoxypropylamine, 2-methyl-1,5-diaminopentane, geranylamine, 2-ethyl-l- hexylamine, 6-methyl-2-heptylamine, cyclooctylamine, aniline, N-phenylethylendiamine, 2-phenylethylamine, N,N-dimethyl4-cyclooctene-l-amine, and any mixture thereof.

Suitably, the absorption solvent comprises at least a secondary amine selected from the group consisting of dipropylamine, N-ethylbutylamine, dibutylamine, diisopropylamine, dicyclohexylamine, bis(2-ethylhexyl)amine, bis(alpha methylbenzyl)amine, bis(1.3-dimethylbutyl)amine, diallylamine, bis[(s)-l-phenylethyl]amine, bis-sec-butylamine, 2,2,6,6-tetramethylpiperidine, N-methylcyclohexylamine, benzyl-tert-butylamine, bis(2-ethylhexyl)amine, 4-tert-butylcyclohexylamine, and any mixture thereof.

Suitably, the absorption solvent comprises at least a tertiary amine selected from the group consisting of triethylamine, 2-(diethylamino)-ethanol, tripropylamine, tributylamine, N,N-dimethylcyclohexylamine, dimethyloctylamine, dimethyl(1-methyl-heptyl)-amine, dimethylallylamine, N-ethyldiisopropylamine, tris(2-ethylhexyl)amine, bis-(2-cyclohexyloxy-ethyl)-methyl-amine, bis(2-(2,4-diethyloctyloxy)-ethyl)-methyl-amine, (2- (2-dimethylamino-ethoxy)-ethyl)-dimethyl-amine, N-isopropylethylenediamine, N-methylenediamine, N,N-dimethylethylenediamine, N,N-dibutyltrimethylenediamine, tris[2-(isopropylamino)ethyl]amine, tris[2-(methylamino) ethyl]amine, and any mixture thereof.

Preferably, the absorption solvent comprises at least a secondary and/or at least a tertiary amine.

In accordance with the invention the absorption solvent has suitably a boiling point of at least 100 °C, preferably at least 110 °C, and more preferably at least 120°C. The absorption solvent has suitably a pKₐ value in the range of from 7.5-11, preferably in the range of from 8-10.5, and more preferably in the range of from 9-10. Suitably, the absorption solvent has a density at 25 °C in the range of from 0.7-1.1 g/mL.

Preferably, the absorption solvent comprises at least a secondary amine and at least a tertiary amine. The ratio secondary amine to tertiary amine is suitably in the range of from 0.5-30, preferably in the range of from 1-20, and more preferred in the range of from 2-10.

Suitably, the at least secondary amine has an absorption rate in the range of from 10⁻⁶-10⁻⁴ kmol/m²/s, preferably in the range of from 5.10⁻⁵-10⁻⁴ kmol/m²/s, and more preferably in the range of from 10⁻⁵-10⁻⁴ kmol/m²/s. Suitably, the at least tertiary amine has an absorption rate in the range of from 10⁻⁶-10⁻⁴ kmol/m²/s, preferably in the range of from 5.10⁻⁵-10⁻⁴ kmol/m²/s, and more preferably in the range of from 10⁻⁵-10⁻⁴ kmol/m²/s.

Suitably, in step (a) the gas stream is contacted with an aqueous solution that comprises the absorption solvent in a concentration in the range of from 1-7M, preferably in the range of from 1-5M.

Step (a) is suitably carried out at a pressure in the range of from 1-150, preferably between 25 and 90 bar, and at a temperature in the range of from 0-60 °C, preferably in the range of from 35-55 °C. Step (a) results in a gas stream with a reduced carbon dioxide content and absorbing solvent rich in carbon dioxide. Suitably, more than 80%, preferably more than 90% and more preferably more than 95% of the carbon dioxide is removed.

In step (b) at least part of the gas stream with reduced carbon dioxide content obtained in step (a) is withdrawn. As this purified gas stream comprises low concentrations of carbon dioxide, it may now be vented into the atmosphere, or used elsewhere.

In step (c) at least part of the carbon dioxide-containing absorption solvent obtained in step (a) is heated to obtain a mixture comprising a gas phase, an aqueous liquid phase and a non-aqueous liquid phase, wherein carbon dioxide is predominantly present in the gas phase. Preferably, the entire carbon dioxide-containing absorption solvent as obtained in step (a) is heated in step (c) to obtain the mixture comprising a gas phase, an aqueous liquid phase and a non-aqueous liquid phase. In step (c) carbon dioxide is predominantly present in the gas phase. The small amount of the carbon dioxide still absorbed is predominantly present in the aqueous liquid phase. Suitably, at least 70%, preferably at least 80%, and more preferably at least 90% of the carbon dioxide is present in the gas phase. More preferably, at least 95%, and most preferably at least 99% of the carbon dioxide is present in the gas phase. Suitably, at least 60%, preferably at least 70%, of the amount of the carbon dioxide still absorbed is predominantly present in the aqueous liquid phase.

In step (c,) the separation into a gas phase, an aqueous liquid phase and a non-aqueous liquid phase is established by heating the absorption solvent. Preferably, the absorption solvent is heated to a temperature in the range of from 60-100°C, more preferably 65-95°C, and most preferably 65-85°C. Suitably, the heating is performed via heat exchange of the carbon dioxide-containing absorption solvent with a hot gas or liquid. This heating step effects that the mixture is obtained having a temperature close to or in the range of the temperature at which regeneration of carbon dioxide-containing absorption solvent will take place in step (d). At least part of the heat requirements of step (c) can suitably be fulfilled using heat from at least part of the gas stream which comprises carbon dioxide as withdrawn from step (e) generated in the regeneration performed in step (d).

In step (d) at least part of the mixture obtained in step (c) is introduced into a gas lift reactor to further release carbon dioxide absorbed in the aqueous liquid phase and the non-aqueous liquid phase, whereby the gas phase establishes circulation and mixing of the aqueous liquid phase and the non-aqueous liquid phase between a lower section of the gas lift reactor and an upper section of the gas lift reactor. Preferably, the entire mixture as obtained in step (c) is introduced into a gas lift reactor. Preferably, in step (d) the carbon dioxide present in the gas phase has a superficial velocity in the range of from 0.01-1 m/s. In step (d), the aqueous liquid phase and the non-aqueous liquid phase have a superficial velocity in the range of from 0-1.5 m/s. In addition, one or more inert gases may also be introduced together with the mixture into the bottom part of the gas lift reactor to ensure proper circulation of the mixture inside the gas lift reactor. The advantage of using such gas lift reactor is that a very good circulation and mixing of the three phases, being the gas phase, the aqueous liquid phase and the non-aqueous liquid phase, is established. As an effect of this circulation, the biphasic solvents are maintained in a finely dispersed turbid state and thereby extensive phase separation of the aqueous liquid phase and the non-aqueous liquid phase (or biphasic solvent) is avoided. If one would use a stirred tank reactor, which is the common practise for regenerating such biphasic solvent systems, the mixture obtained from step (c) of the process needs to be mixed in the stirred tank reactor by mechanical stirring. The energy saving established by using the gas lift reactor is significant.

In the process according to the present invention any known type of gas lift reactor can suitably be used. In this respect reference can for instance be made to Ullmann's Encyclopedia of Industrial Chemistry, Vol. B4, pages 290-291, 1992, VCH Publishers, Inc., wherein a number of gas lift reactors has been described.

Suitably, the gas lift reactor comprises a riser connected to an upper and lower part of the reactor, a downcomer arranged around the riser, inlet means for introducing the absorption solvent which comprises the three phases, outlet means for withdrawing the gas stream, and outlet means for withdrawing the mixed aqueous liquid phase and the non-aqueous liquid phase or regenerated absorption solvent. Preferably, the height-to diameter ratio of the riser is in the range of from 1-15.

In a particular attractive embodiment of the present invention the gas lift reactor comprises a reactor having the form of a loop, which loop comprises inlet means for introducing the mixture as obtained in step (c), outlet means for withdrawing the gas stream, and outlet means for withdrawing the mixed aqueous liquid phase and the non-aqueous liquid phase or regenerated absorption solvent. Preferably, the loop comprises a pump for pumping the liquid phases in the reactor, which pump is arranged downstream of the outlet means for withdrawing the gas stream and upstream of the inlet means for introducing the mixture as obtained in step (c).

Suitably, the gas lift reactor comprises a demister arranged upstream of the outlet means for withdrawing the gas stream.

Suitably, the regeneration of the absorption solvent in step (d) is carried out at a temperature in the range of from 60-100°C, which brings about a significant improvement in overall energy efficiency when compared to known process such as described in WO-A-95/21683, and in US 2009/0199709. Preferably, the regeneration in step (d) is carried out at a temperature in the range of from 65-95°C, more preferably at a temperature in the range of from 70-90°C. Step (d) is suitably carried out at a pressure in the range of from 1-30 bar, preferably in the range of from 1-20 bar.

In step (e), a gas stream which comprises carbon dioxide is withdrawn from the gas lift reactor. Suitably, at least part of the carbon dioxide gas stream as withdrawn in step (e) is recycled to step (d).

Steam that is present in the gas stream withdrawn in step (e) can at least partly be condensed to provide heat that can be used at some stage of the process. At least part of the carbon dioxide-containing absorption solvent as obtained in step (a) is heated through heat exchange with the hot gas stream enriched in carbon dioxide as withdrawn from step (e).

The gas stream withdrawn in step (e) containing almost pure carbon dioxide, can for example be used in enhanced oil recovery. The carbon dioxide enriched gas stream that is withdrawn from step (e) has an elevated pressure. Suitably, the pressure of said carbon dioxide enriched gas stream is in the range of from 5 to 30 bar, preferably from 8 to 30 bar. In applications where the carbon dioxide enriched gas stream needs to be at a high pressure, for example when it will be used for injection into a subterranean formation, it is already at an elevated pressure. In a suitable embodiment, the pressurised carbon dioxide enriched gas stream as withdrawn from step (e) is used for enhanced oil recovery, suitably by injecting it into an oil reservoir where it tends to dissolve into the oil in place, thereby reducing its viscosity and thus making it more mobile for movement towards the producing well. In another suitable embodiment, the pressurised carbon dioxide gas stream as withdrawn from step (e) is pumped into an aquifer reservoir for storage. In yet another suitable embodiment, the pressurised carbon dioxide-enriched gas stream is pumped into an empty oil reservoir for storage. For all the above options, a series of compressors can suitably be used to pressurise the carbon dioxide-enriched gas stream to the desired high pressures.

In step (f) a mixture of the aqueous liquid phase and the non-aqueous liquid phase is withdrawn from the gas lift reactor, which mixture has released carbon dioxide. In a subsequent step (g) cooling of at least part of the mixture of the aqueous liquid phase and the non-aqueous liquid phase takes place to obtain regenerated absorption solvent.

Suitably, at least part of the stream of the regenerated absorption solvent as obtained in step (g) is recycled to step (a). Preferably, the entire liquid phase as obtained in step (f) is cooled in step (g) and recycled to step (a). Cooling in step (g) can suitably take place by passing the mixture to a heat exchanger, where it is cooled against the carbon dioxide-containing absorption solvent as obtained in step (a). Cooled regenerated absorption solvent can subsequently be passed to step (a).

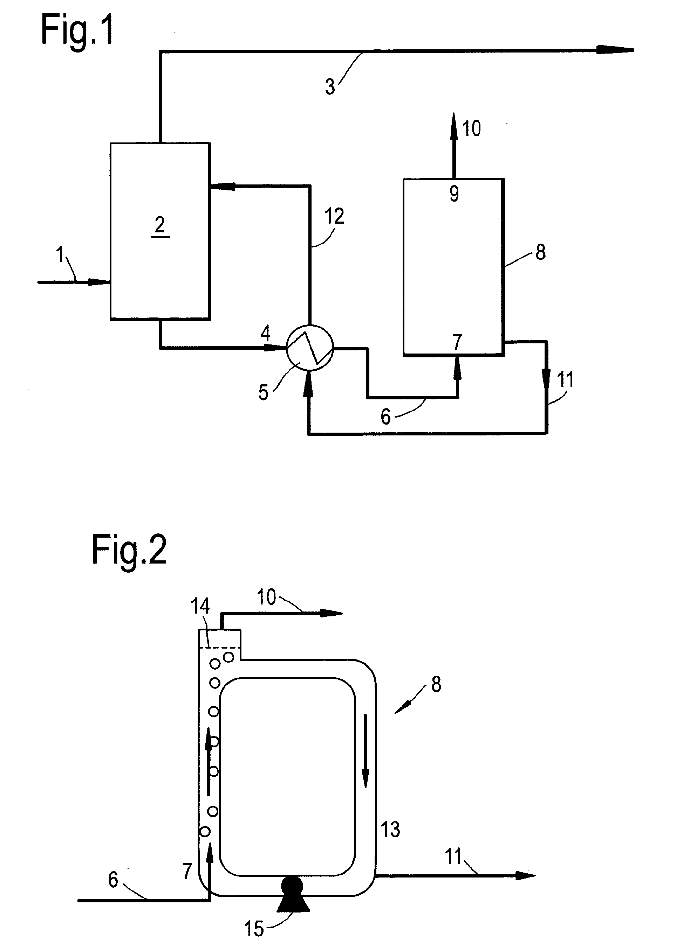

One embodiment of the present invention is illustrated in Figure 1.

In Figure 1, a gas stream comprising carbon dioxide is led via line 1 to absorber unit 2. In absorber unit 2, the gas stream is contacted with an absorption solvent, thereby transferring carbon dioxide from the gas stream to the absorption solvent to obtain purified gas stream and absorption solvent enriched in carbon dioxide. The purified gas stream is led from the absorber unit 2 via line 3. The absorption solvent enriched in carbon dioxide is led from the absorber unit 2 via line 4 to heat exchanger 5, where it is heated thereby establishing a mixture of a gas phase, aqueous liquid phase and a non-aqueous liquid phase. The resulting mixture is led via line 6 to the bottom part 7 of gas lift reactor 8. In gas lift reactor 8, the heated mixture moves upwardly via an internal tube (not shown). In the upper part 9 of the gas lift reactor part of the mixture which has passed through the internal tube will be recycled to the opening of the internal tube in the bottom part of the gas lift reactor 8. A hot gas stream enriched in carbon dioxide is removed from the gas lift reactor 8 via line 10. A stream of carbon dioxide depleted absorption solvent which comprises a mixture of aqueous liquid phase and non-aqueous liquid phase, is withdrawn from the gas lift reactor 8 via line 11, and at least part of said stream is passed to heat exchanger 5, where it is cooled against carbon dioxide-containing absorption solvent which passes through line 4. Cooled regenerated absorption solvent is led via line 12 to absorber unit 2.

In Figure 2, a preferred embodiment of the gas lift reactor 8 is shown. The resulting mixture obtained from heat exchanger 5 is in this embodiment led via line 6 to the bottom part 7 of gas lift reactor 8 having the form of a loop 13. In the loop 13, the heated mixture moves upwardly. In the upper part of the loop dotted line 14 indicates the interface between gas and liquid. A hot gas stream enriched in carbon dioxide is removed from the loop via line 10. A stream of carbon dioxide depleted absorption solvent, which comprises a mixture of aqueous liquid phase and non-aqueous liquid phase, is withdrawn from the loop 13 via line 11, and part is recycled in the loop 13 using a pump 15.

The invention is illustrated using the following non-limiting Examples.

### Example 1 (according to the invention)

In a process as described in Figure 1, a flue gas comprising 15 % (v/v) carbon dioxide is routed via line 1 to absorber unit 2 with a flow rate of 8.3 e-⁵Nm³/s. In the absorber unit 2, the flue gas is contacted at a temperature of 30 °C and a pressure of 1 bar with an aqueous solution which comprises as the absorption solvent N,N-dimethylcyclohexylamine (DMCA) in a concentration of 4 M. An amount of 85% of the carbon dioxide is absorbed by the absorption solvent in absorber unit 2. Purified gas is removed from absorber unit 2 via line 3. The carbon dioxide enriched absorption solvent leaving the absorber unit 2 via line 4 is led via heat exchanger 5, where it is heated to a temperature of 85 °C to obtain a gas phase, aqueous liquid phase and a non-aqueous liquid phase. The mixture so obtained is fed via line 6 to gas lift reactor 8. The gas lift reactor is operated at a temperature of 85 °C and a pressure of 1 bar. A hot gas stream enriched in carbon dioxide is removed from the gas lift reactor 8 via line 10. A stream of carbon dioxide depleted absorption solvent, comprising both the aqueous and the non-aqueous liquid phase, is withdrawn from the gas lift reactor 8 via line 11, and said stream is passed to heat exchanger 5, where it is cooled against carbon dioxide-containing absorption solvent which passes through line 4. Cooled regenerated absorption solvent is led via line 12 to absorber unit 2.

### Example 2 (comparative Example)

A similar process as described in Example 1 was carried out, except that instead of gas lift reactor 8 a conventional stirred tank reactor was used which operated at a pressure of 1 bar and a temperature of 85 °C, whereby carbon dioxide-containing absorption solvent is passed via line 6 to the upper part of the stirred tank reactor.

In accordance with the present process (Example 1) an energy saving was established in the range of from 0.1-0.22 kWatt when compared with Example 2 wherein the mixture obtained from the heat exchanger 5 needed to be mixed in the stirred tank reactor by mechanical stirring. The energy saving established depended on the actual stirring speed applied in the stirred tank reactor. In view of the above, it will be clear that the process according to the present invention brings about a significant energy saving. Additionally, the use of the gas lift reactor in accordance with the present invention provides an improvement in stability of operation.

## Claims

1. A process for removing carbon dioxide from a gas stream (1) comprising the steps of:
(a) contacting the gas stream with an absorption solvent to obtain a gas stream with a reduced carbon dioxide content and a carbon dioxide-containing absorption solvent;
(b) withdrawing at least part of the gas stream (3) with the reduced carbon dioxide content;
(c) withdrawing at least part of the carbon dioxide-containing absorption solvent (4) obtained in step (a) and heat (5) it to obtain a mixture (6) comprising a gas phase, an aqueous liquid phase and a non-aqueous liquid phase, wherein carbon dioxide is predominantly present in the gas phase;
(d) introducing at least part of the mixture obtained in step (c) into a gas lift reactor (8) to further release carbon dioxide absorbed in the aqueous liquid phase and the non-aqueous liquid phase, whereby the gas phase establishes circulation and mixing of the aqueous liquid phase and the non-aqueous liquid phase between a lower section (7) of the gas lift reactor and an upper section (9) of the gas lift reactor;
(e) withdrawing a gas stream (10) comprising carbon dioxide from the gas lift reactor;
(f) withdrawing a mixture (11) of the aqueous liquid phase and the non-aqueous liquid phase from the gas lift reactor, which mixture has released carbon dioxide; and
(g) cooling (5) at least part of the mixture of the aqueous liquid phase and the non-aqueous liquid phase to obtain regenerated absorption solvent.

2. A process according to claim 1, wherein at least part of the regenerated absorption solvent as obtained in step (g) is recycled to step (a).

3. A process according to claim 1 or 2, wherein the carbon dioxide-containing absorption solvent is heated to a temperature in the range of from 60-100°C to obtain the mixture of the gas phase, the aqueous liquid phase and the non-aqueous liquid phase in step (c) .

4. A process according to any one of claims 1-3, wherein the further release of carbon dioxide absorbed in the aqueous liquid phase and the non-aqueous liquid phase in step (d) is carried out at a temperature in the range of from 60-100°C.

5. A process according to any one of claims 1-4, wherein the gas lift reactor comprises a riser connected to an upper and lower part of the reactor and a downcomer arranged around the riser.

6. A process according to any one of claims 1-5, wherein the gas lift reactor comprises a reactor having the form of a loop.

7. A process according to claim 6, wherein the loop comprises a pump (15) for pumping the mixture obtained in step (c) in the reactor, which pump is arranged downstream of outlet means for withdrawing the gas stream and upstream of inlet means for introducing the mixture.

8. A process according to any one of claims 1-7, wherein at least part of the gas stream withdrawn in step (e) is recycled to step (d).

9. A process according to any one of claims 1-8, wherein the absorption solvent comprises an amine.

10. A process according to any one of claims 1-9, wherein the absorption solvent comprises at least a secondary and at least a tertiary amine.

11. A process according to one of claims 1-10, wherein the absorption solvent comprises at least a secondary amine selected from the group consisting of dipropylamine, N-ethylbutylamine, dibutylamine, diisopropylamine, dicyclohexylamine, bis(2-ethylhexyl)amine, bis(alpha methylbenzyl)amine, bis(1.3-dimethylbutyl)amine, diallylamine, bis[(s)-l-phenylethyl]amine, bis-sec-butylamine, 2,2,6,6-tetramethylpiperidine, N-methylcyclohexylamine, benzyl-tert-butylamine, bis(2-ethylhexyl)amine, 4-tert-butylcyclohexylamine, and any mixture thereof.

12. A process according to one of claims 1-11, wherein the absorption solvent comprises at least a tertiary amine selected from the group consisting of triethylamine, 2-(diethylamino)-ethanol, tripropylamine, tributylamine, N,N-dimethylcyclohexylamine, dimethyloctylamine, dimethyl(1-methyl-heptyl)-amine, dimethylallylamine, N-ethyldiisopropylamine, tris(2-ethylhexyl)amine, bis-(2-cyclohexyloxy-ethyl)-methyl-amine, bis(2-(2,4-diethyloctyloxy)-ethyl)-methyl-amine, (2-(2-dimethylamino-ethoxy)-ethyl)-dimethyl-amine, N-isopropylethylenediamine, N-methylenediamine, N,N-dimethylethylenediamine, N,N-dibutyltrimethylenediamine, tris[2-(isopropylamino)ethyl]amine, tris[2-(methylamino) ethyl]amine, and any mixture thereof.

## Patentansprüche

1. Verfahren zum Entfernen von Kohlendioxid aus einem Gasstrom (1), umfassend die Schritte:
(a) In-Kontakt-Bringen des Gasstromes mit einem Absorptionslösungsmittel, um einen Gasstrom mit einem verringerten Kohlendioxidgehalt und ein kohlendioxidhaltiges Absorptionslösungsmittel zu erhalten;
(b) Entnehmen von mindestens einem Teil des Gasstroms (3) mit dem verringerten Kohlendioxidgehalt;
(c) Entnehmen von mindestens einem Teil des kohlendioxidhaltigen Absorptionslösungsmittels (4), welches im Schritt (a) erhalten wird, und Erhitzen (5) dieses, um eine Mischung (6), umfassend eine Gasphase, eine wässrige flüssige Phase und eine nicht-wässrige flüssige Phase zu erhalten, wobei Kohlendioxid überwiegend in der Gasphase vorhanden ist;
(d) Einführen von mindestens einem Teil der im Schritt (c) erhaltenen Mischung in einen Gashebereaktor (8), um weiter Kohlendioxid freizusetzen, welches in der wässrigen flüssigen Phase und in der nicht-wässrigen flüssigen Phase absorbiert ist, wobei die Gasphase einen Kreislauf und ein Mischen der wässrigen flüssigen Phase und der nicht-wässrigen flüssigen Phase zwischen einem unteren Abschnitt (7) des Gashebereaktors und einem oberen Abschnitt (9) des Gashebereaktors bewirkt;
(e) Entnehmen eines Gasstroms (10), umfassend Kohlendioxid aus dem Gashebereaktor;
(f) Entnehmen einer Mischung (11) der wässrigen flüssigen Phase und der nicht-wässrigen flüssigen Phase aus dem Gashebereaktor, welche Mischung Kohlendioxid freigesetzt hat; und
(g) Kühlen (5) von mindestens einem Teil der Mischung der wässrigen flüssigen Phase und der nicht-wässrigen flüssigen Phase, um regeneriertes Absorptionslösungsmittel zu erhalten.

2. Verfahren nach Anspruch 1, wobei mindestens ein Teil des regenerierten Absorptionslösungsmittels, wie es in Schritt (g) erhalten wird, in den Schritt (a) rezykliert wird.

3. Verfahren nach Anspruch 1 oder 2, wobei das kohlendioxidhaltige Absorptionslösungsmittel auf eine Temperatur im Bereich von 60-100°C erhitzt wird, um die Mischung der Gasphase, der wässrigen flüssigen Phase und der nicht-wässrigen flüssigen Phase im Schritt (c) zu erhalten.

4. Verfahren nach einem der Ansprüche 1-3, wobei die weitere Freisetzung von Kohlendioxid, welches in der wässrigen flüssigen Phase und in der nicht-wässrigen flüssigen Phase absorbiert ist, im Schritt (d) bei einer Temperatur im Bereich von 60-100°C erfolgt.

5. Verfahren nach einem der Ansprüche 1-4, wobei der Gashebereaktor ein Steigrohr, welches mit einem oberen und einem unteren Teil des Reaktors verbunden ist, und ein Fallrohr umfasst, das um das Steigrohr angeordnet ist.

6. Verfahren nach einem der Ansprüche 1-5, wobei der Gashebereaktor einen Reaktor in Form einer Schleife umfasst.

7. Verfahren nach Anspruch 6, wobei die Schleife eine Pumpe (15) zum Pumpen der im Schritt (c) erhaltenen Mischung in den Reaktor umfasst, welche Pumpe stromabwärts von den Auslassmitteln zum Entnehmen des Gasstromes und stromaufwärts von den Einlassmitteln zum Einführen der Mischung angeordnet ist.

8. Verfahren nach einem der Ansprüche 1-7, wobei mindestens ein Teil des Gasstroms, der im Schritt (e) entnommen wird, in den Schritt (d) rezykliert wird.

9. Verfahren nach einem der Ansprüche 1-8, wobei das Absorptionslösungsmittel ein Amin umfasst.

10. Verfahren nach einem der Ansprüche 1-9, wobei das Absorptionslösungsmittel mindestens ein sekundäres und mindestens ein tertiäres Amin umfasst.

11. Verfahren nach einem der Ansprüche 1-10, wobei das Absorptionslösungsmittel mindestens ein sekundäres Amin umfasst, ausgewählt von der Gruppe, bestehend aus Dipropylamin, N-Ethylbutylamin, Dibutylamin, Diisopropylamin, Dicyclohexylamin, Bis(2-ethylhexyl)amin, Bis(alpha-methylbenzyl)amin, Bis(1,3-dimethylbutyl)amin, Diallylamin, Bis[(s)-1-phenylethyl]amin, Bis-secbutylamin, 2,2,6,6-Tetramethylpiperidin, N-Methylcyclohexylamin, Benzyl-tert-butylamin, Bis(2-ethylhexyl)amin, 4-Tert-butylcyclohexylamin, und jedweder Mischung hievon.

12. Verfahren nach einem der Ansprüche 1-11, wobei das Absorptionslösungsmittel mindestens ein tertiäres Amin umfasst, ausgewählt von der Gruppe, bestehend aus Triethylamin, 2-(Diethylamino)-ethanol, Tripropylamin, Tributylamin, N,N-Dimethylcyclohexylamin, Dimethyloctylamin, Dimethyl(1-methyl-heptyl)-amin, Dimethylallylamin, N-Ethyldiisopropylamin, Tris(2-ethylhexyl)amin, Bis-(2-cyclohexyloxy-ethyl)-methyl-amin, Bis(2-(2,4-diethyloctyloxy)-ethyl)-methyl-amin, (2-(2-Dimethylamino-ethoxy)-ethyl)-dimethyl-amin, N-Isopropylethylendiamin, N-Methylendiamin, N,N-Dimethylethylendiamin, N,N-Dibutyltrimethylendiamin, Tris[2-(isopropylamino)ethyl]amin, Tris[2-(methylamino)ethyl]amin, und jedweder Mischung hievon.

## Revendications

1. Procédé pour éliminer le dioxyde de carbone d'un flux gazeux (1), comprenant les étapes de :
(a) mettre en contact le flux gazeux avec un solvant d'absorption pour obtenir un flux gazeux à teneur réduite en dioxyde de carbone et un solvant d'absorption contenant du dioxyde de carbone ;
(b) retirer au moins une partie du flux gazeux (3) à teneur réduite en dioxyde de carbone ;
(c) retirer au moins une partie du solvant d'absorption (4) contenant du dioxyde de carbone obtenu lors de l'étape (a) et chauffer (5) celui-ci afin d'obtenir un mélange (6) comprenant une phase gazeuse, une phase liquide aqueuse et une phase liquide non-aqueuse, où le dioxyde de carbone est principalement présent dans la phase gazeuse ;
(d) introduire au moins une partie du mélange obtenu lors de l'étape (c) dans un réacteur (8) à poussée de gaz pour libérer davantage de dioxyde de carbone absorbé dans la phase liquide aqueuse et dans la phase liquide non-aqueuse, où la phase gaz établit une circulation et le mélange de la phase liquide aqueuse et de la phase liquide non-aqueuse entre une section basse (7) du réacteur à poussée de gaz et une section haute (9) du réacteur à poussée de gaz ;
(e) retirer un flux gazeux (10) comprenant du dioxyde de carbone du réacteur à poussée de gaz ;
(f) retirer un mélange (11) de la phase liquide aqueuse et de la phase liquide non-aqueuse du réacteur à poussée de gaz, lequel mélange a dégagé du dioxyde de carbone ; et
(g) refroidir (5) au moins une partie du mélange de la phase liquide aqueuse et de la phase liquide non-aqueuse afin d'obtenir un solvant d'absorption régénéré.

2. Procédé selon la revendication 1, dans lequel au moins une partie du solvant d'absorption régénéré tel qu'obtenu lors de l'étape (g) est recyclé dans l'étape (a).

3. Procédé selon la revendication 1 ou 2, dans lequel le solvant d'absorption contenant du dioxyde de carbone est chauffé à une température allant de 60 à 100 °C pour obtenir le mélange de la phase gazeuse, la phase liquide aqueuse, et la phase liquide non-aqueuse lors de l'étape (c).

4. Procédé selon l'une quelconque des revendications 1 à 3, dans lequel le dégagement ultérieur de dioxyde de carbone absorbé dans la phase liquide aqueuse et la phase liquide non-aqueuse lors de l'étape (d) est réalisé à une température comprise entre 60 et 100 °C.

5. Procédé selon l'une quelconque des revendications 1 à 4, dans lequel le réacteur à poussée de gaz comprend une conduite de montée connectée à une partie supérieure et inférieure du réacteur et une conduite de descente arrangée autour de la conduite de montée.

6. Procédé selon l'une quelconque des revendications 1 à 5, dans lequel le réacteur à poussée de gaz comprend un réacteur ayant la forme d'une boucle.

7. Procédé selon la revendication 6, dans lequel la boucle comprend une pompe (15) pour pomper le mélange obtenu dans le réacteur lors de l'étape (c), laquelle pompe est arrangée en aval de moyens de sortie pour retirer le flux gazeux et en amont de moyens d'entrée pour l'introduction du mélange.

8. Procédé selon l'une quelconque des revendications 1 à 7, dans lequel au moins une partie du flux gazeux retiré lors de l'étape (e) est recyclée lors de l'étape (d).

9. Procédé selon l'une quelconque des revendications 1 à 8, dans lequel le solvant d'absorption comprend une amine.

10. Procédé selon l'une quelconque des revendications 1 à 9, dans lequel le solvant d'absorption comprend au moins une amine secondaire et au moins une amine tertiaire.

11. Procédé selon l'une quelconque des revendications 1 à 10, dans lequel le solvant d'absorption comprend au moins une amine secondaire choisie parmi le groupe consistant en la dipropylamine, la N-éthylbutylamine, la dibutylamine, la diisopropylamine, la dicyclohexylamine, la bis(2-éthylhexyl)amine, la bis(alpha méthylbenzyl)amine, la bis(1,3-diméthylbutyl)amine, la diallylamine, la bis[(s)-1-phényléthyl]amine, la bis-sec-butylamine, la 2,2,6,6-tétraméthylpipéridine, la N-méthylcyclohéxylamine, la benzyl-tert-butylamine, la bis(2-éthylhéxyl)amine, la 4-tert-butylcyclohéxylamine, et un mélange quelconque de ceux-ci.

12. Procédé selon l'une quelconque des revendications 1 à 11, dans lequel le solvant d'absorption comprend au moins une amine tertiaire choisie parmi le groupe consistant en la triéthylamine, le 2-(diéthylamino)-éthanol, la tripropylamine, la tributylamine, la N,N-diméthylcyclohéxylamine, la diméthyloctylamine, la diméthyl(1-méthyl-heptyl)-amine, la diméthylallylamine, la N-éthyldiisoproprylamine, la tris(2-éthylhéxyl)amine, la bis-(2-cyclohéxyloxy-éthyl)-méthyl-amine, la bis(2-(2,4-diéthyloctyloxy)-éthyl)-méthyl-amine, la (2-(2-diméthylamino-éthoxy)-éthyl)-diméthyl-amine, la N-isopropyléthylènediamine, la N-méthylènediamine, la N, N-diméthyléthylènediamine, la N,N-dibutyltriméthylènediamine, la tris[2-(isopropylamino)éthyl]amine, la tris[2-(méthylamino)éthyl]amine, et un mélange quelconque de ceux-ci.
